# EUROPÄISCHE PATENTSCHRIFT

(11) **EP 3 159 433 B1**
(45) Veröffentlichungstag und Bekanntmachung des Hinweises auf die Patenterteilung: **25.07.2018**
(21) Anmeldenummer: 15190492.7
(22) Anmeldetag: 20.10.2015
(51) Int. Cl.: C25B 11/03, C25B 11/04, C25D 5/14, C25D 5/48, C25D 21/12, C25B 1/04

(54) **ELEKTRODE FÜR DIE ALKALISCHE WASSERELEKTROLYSE**
ELECTRODE FOR THE ALKALINE ELECTROLYSIS OF WATER
ÉLECTRODE POUR L'ELECTROLYSE ALCALINE DE L'EAU

(43) Veröffentlichungstag der Anmeldung: 26.04.2017
(73) Patentinhaber: MTV Metallveredlung GmbH & Co. KG, 42699 Solingen (DE); ELB Elektrolysetechnik GmbH, 35510 Butzbach (DE)
(72) Erfinder: Wilbuer, Klaus Leo, 42699 Solingen (DE); Barisic, Mate, 35428 Langgöns (DE)
(74) Vertreter: Rausch Wanischeck-Bergmann Brinkmann

(56) Entgegenhaltungen:
- DE-A1- 1 496 954
- US-A- 4 221 643
- US-A- 4 300 993
- US-A- 4 331 517
- US-A- 4 354 915

## Beschreibung

Die Erfindung betrifft eine Elektrode für den Einsatz in der alkalischen Wasserelektrolyse, sowie ein Verfahren zu deren Herstellung.

Die Wasserelektrolyse ist ein seit dem Ende des neunzehnten Jahrhunderts weltweit etabliertes Verfahren zur Herstellung von Wasserstoff. In den vergangenen zehn Jahren rückte die Elektrolyse, vor dem Hintergrund der in Deutschland beschlossenen und gesellschaftlich gewollten Energiewende sowie vor dem Hintergrund des weltweiten Klimawandels, geopolitischer Abhängigkeiten bezüglich fossiler Energieträger sowie des gesetzlich verankerten Atomausstiegs in Deutschland als attraktives Verfahren zur Herstellung von Wasserstoff als Energieträger zunehmend in den Fokus des industriellen interesses. Die besondere Attraktivität der Wasserelektrolyse gegenüber anderen Verfahren zur Wasserstoffherstellung, z. B. auf Erdöl-Basis, ergibt sich aus der Möglichkeit, der direkten Anbindung an regenerative Energiequellen (Windkraft, Fotovoltaik, Wasserkraft etc.). Die hierfür eingesetzten Elektrolyseure sind damit in der Lage unmittelbar auf intermittierende Leistungsangebote zu reagieren und können so, neben der Wasserstofferzeugung auch zur Netzregelung verwendet werden, was insbesondere zur effizienten Regelung der stark fluktuierenden Windenergie-Einspeisung von großem Vorteil ist.

Im Bereich der Wasserelektrolyse sind insbesondere die alkalische Wasserelektrolyse, die saure Wasserelektrolyse (auch "proton exchange membrane" oder "polymer electrolyte membrane", kurz PEM-Elektrolyse) sowie die Hochtemperatur-Wasserdampfelektrolyse bekannt. Es hat sich indes herausgestellt, dass zumindest derzeit lediglich die alkalische Wasserelektrolyse für die vorbeschriebene industrielle Nutzung geeignet ist. Dies insbesondere deshalb, da sie seit vielen Jahrzehnten industriell genutzt und getestet ist. Darüber hinaus zeichnet sie sich durch eine problemlose Skalierbarkeit auch im Bereich der großtechnischen Anwendung aus. Die vergleichsweise junge PEM-Elektrolysetechnologie ist derzeit unter anderem durch ungünstige Preis/Leistungsverhältnisse, aufgrund der vergleichsweise aufwendigen Herstellung des dort zwingenderweise verwendeten Membranseparators nur für kleinere Systemlösungen (< 50 kW) geeignet. Auch die Hochtemperaturelektrolyse steckt bezüglich der Erprobung noch in den Kinderschuhen und ist daher großtechnisch nicht einsetzbar.

Es besteht daher ein großes industrielles Interesse an der Verbesserung der bewährten alkalischen Wasserelektrolyse.

Wie allgemein bekannt ist, besteht die Elektrolyse von Wasser aus zwei Teilreaktionen, die an den beiden Elektroden (Kathoden- und Anodenräumen) ablaufen. Bei der alkalischen Wasserelektrolyse tauchen die beiden Elektroden in eine hochkonzentrierte wässrige Alkali-Lösung, vorzugsweise KOH-Lösung ein. Im Kathodenraum entsteht im Laufe der Reaktion Wasserstoff aus der Reduktion von H*-Ionen, während im Anodenraum Sauerstoff aus der Oxidation von OH⁻-Ionen gebildet wird.

Bei solchen Redox-Reaktionen, bei denen Gase gebildet werden ist insbesondere die Überspannung besagter Gase an der jeweiligen Elektrode problematisch, da sie zum einen zu einem erhöhten Energieverbrauch und zum anderen zur Bildung unerwünschter Nebenprodukte führen kann. Im Allgemeinen treten Überspannungen dann auf, wenn wenigstens ein Einzelschritt der Elektrolysereaktion kinetisch gehemmt ist. Hierzu kommen insbesondere alle Teilschritte des Gesamtprozesses wie insbesondere, die Diffusion der Reaktanden zur Elektrode, die Adsorption des Reaktanden, der Elektronenübergang vom Reaktanden zur Elektrode im Falle der Oxidation oder von der Elektrode zum Reaktanden bei der Reduktion, die Desorption des Produktes und die Diffusion des Produktes in die Lösung.

Bekanntermaßen ist die aufzubringende Überspannung abhängig vom verwendeten Elektrodenmaterial. Es hat sich daher im Stand der Technik etabliert, Materialien zu verwenden, die lediglich eine geringe Überspannung erforderlich macht. Mit Bezug auf die Wasserstoffüberspannung an der Elektrode ist es daher aus dem Stand der Technik bekannt geworden, Platin-, Palladium- oder Goldelektroden zu verwenden, an denen Wasserstoff eine vergleichsweise geringe Überspannung zeigt (Pt: - 0,07 V; Pd: - 0,07 V; Au: - 0,09 V).
Besagte Materialien sind für einen großtechnischen Einsatz in industriellem Maßstab aufgrund ihrer Seltenheit und der damit verbundenen Kosten nicht geeignet. Darüber hinaus hat sich gezeigt, dass vorgenannte Materialien gegenüber den typischerweise verwendeten Elektrolyten nicht beständig sind. Man ist daher zweckmäßigerweise dazu übergegangen, Elektroden aus weniger seltenen, aber dafür beständigeren Materialien, wie insbesondere Eisen, Nickel oder Graphit einzusetzen. Nachteiligerweise sind die gemessenen Überspannungsanteile von Wasserstoff an besagten Materialien um wenigstens eine Größenordnung schlechter als die der vorbeschriebenen teureren Materialien (Fe: - 0,15 V; Ni: - 0,28 V; C: - 0,62 V). Der Energieverbrauch von Elektrolysezellen mit Elektroden aus diesen Materialien ist daher vergleichsweise hoch, weswegen ein großes industrielles Interesse daran besteht, die Leistungsfähigkeit von alkalischen Wasserelektrolyseuren zu verbessern. DE 14 96 954 A1 beschreibt eine poröse Nickelelektrode. Zur Zeit liegt der mit aus dem Stand der Technik bekannten Elektrolyseuren erreichbare energetische Wirkungsgrad bei ca. 75 %, die Zellspannung bei ca. 1,9 V und die zur Herstellung von einem m³ Wasserstoff benötigte Stromenergie bei 4,5 bis 4,9 kW/h. Eine Verbesserung der vorgenannten Parameter ist insbesondere bei der Nutzung von Wasserstoff als Energiespeicher wichtig, wenn beispielsweise aus saisonal, regional oder tageszeitbedingt schwankenden regenerativen Energiequellen eine stabile Stromversorgung etabliert werden soll.
Es ist daher **Aufgabe** der Erfindung eine aus einem in industriellem Maßstab verfügbaren Material gebildete Elektrode für den Einsatz in der alkalische Wasserelektrolyse bereitzustellen, welche eine im Vergleich mit dem Stand der Technik verbesserte Überspannungscharakteristik hinsichtlich der an ihr gebildeten Gase aufweist. Diese Aufgabe wird durch eine Elektrode mit den in Anspruch 1 angegebenen Merkmalen gelöst. Die erfindungsgemäße Elektrode zeichnet sich insbesondere durch eine exzellente Korrosionsbeständigkeit gegenüber den in der alkalischen Wasserelektrolyse eingesetzten alkalischen Elektrolyten aus, was sich insbesondere in einer vergleichsweise niedrigen Degradationsrate von lediglich 5 mV/Jahr äußert und einen effizienten Betrieb von bis zu 15 Jahren erlaubt. Durch entsprechende Wartung kann die Lebensdauer vorteilhafterweise auf bis zu 40 Jahre verlängert werden. Darüber hinaus zeichnet sich die erfindungsgemäße Elektrode dadurch aus, dass Überspannungen von Wasserstoff als auch Sauerstoff an der jeweiligen Elektrode um bis zu 0,15 V gesenkt werden können. Erfindungsgemäß wird dies insbesondere durch die sich graduell verändernde Porengröße der porösen Metallschicht erreicht, wodurch eine vergleichsweise riesige Elektrodenoberfläche geschaffen wird, was insbesondere hinsichtlich des Adsorption, Desorptions- und des Elektronenübergangsverhaltens zu einer Verminderung der kinetischen Hemmung der jeweiligen Teilreaktion führt. Durch den Umstand, dass die Porengröße auf der dem Elektrolyten zugewandten Seite der porösen Metallschicht vergleichsweise groß ist und mit abnehmenden Abstand zur Korrosionsschutzschicht graduell kleiner wird, ist darüber hinaus eine kinetische Hemmung der Diffusionsschritte der jeweiligen Teilreaktionen vermindert, da für eine gute Zugänglichkeit der Elektrode gesorgt ist. Makroskopisch betrachtet führt die durch die große Oberfläche der Elektrode bedingte niedrige Stromdichte zu einer bedeutenden Senkung der Überspannung. Durch den Einsatz der erfindungsgemäßen Elektroden in einem alkalischen Elektrolyseur lassen sich die Zellspannung auf 1,78 bis 1,72 V und, die Stromenergie auf 4,3 kW/h bis 4,0 kW/h pro hergestelltem Kubikmeter Wasserstoff im Vergleich zum Stand der Technik senken. Der Wirkungsgrad der Zelle wird dabei vorteilhafterweise auf 83 bis 90 % erhöht.

Gemäß einem Merkmal der Erfindung ist die Korrosionsschutzschicht aus Nickel gebildet. Es hat sich herausgestellt, dass Nickel insbesondere in Verbindung mit den verwendeten Materialien für die poröse Metallschicht einen besonders guten Korrosionsschutz gegenüber stark alkalischen Elektrolyten (NaOH, KOH) aufweist.

Gemäß einem weiteren Merkmal der Erfindung ist die poröse Metallschicht aus Nickel gebildet. Es hat sich gezeigt, dass sich Nickel zur Ausbildung einer porösen Schicht mit vergleichsweise großer Oberfläche besonders gut eignet, da es vorteilhafterweise in Dendritstruktur vorliegt und sich somit besonders gut als Material zur Ausbildung einer porösen Elektrodenschicht eignet.
Ferner wird mit der Erfindung ein Verfahren zur Herstellung einer Elektrode für die alkalische Wasserelektrolyse vorgeschlagen. Hierbei wird in einem ersten Verfahrensschritt eine Korrosionsschutzschicht auf einem Träger galvanisch abgeschieden, und in einem zweiten Verfahrensschritt eine Legierungsschicht wenigstens bestehend aus einer ersten Komponente aus Nickel und einer zweiten Komponente auf der Korrosionsschutzschicht galvanisch abgeschieden, wobei die Abscheidungsraten der ersten und der zweiten Komponente während der Abscheidung der Legierungsschicht so eingestellt werden, dass der Anteil der ersten Komponente in der Legierungsschicht mit zunehmender Schichtdicke graduell abnimmt und der Anteil der zweiten Komponente graduell zunimmt, und die zweite Komponente der Legierungsschicht in einem dritten Verfahrensschritt aus der Legierungsschicht im wesentlichen vollständig herausgelöst wird.
Durch das erfindungsgemäße Verfahren ist es vorteilhafterweise möglich, korrosionsbeständige Elektroden zum Einsatz in der alkalischen Wasserelektrolyse herzustellen, welche eine sich graduell ändernde poröse Oberflächenstruktur mit vergleichsweise großer Oberfläche bereitzustellen. Von entscheidender Bedeutung ist hierbei die erfindungsgemäß vorgesehene Einstellung der Abscheidungsraten der ersten Komponente und der zweiten Komponente der Legierungsschicht. Die Abscheidungsraten können hierbei vorteilhafterweise mittels eines automatisierten Prozesses gesteuert werden. Es ist hierbei möglich, die Abscheidungsraten sowohl stufenweise als auch kontinuierlich mit fortschreitender Abscheidung der Legierungsschicht zu ändern. Es hat sich herausgestellt, dass eine kontinuierliche Änderung der Abscheidungsraten in Abhängigkeit der Schichtdicke der abgeschiedenen Legierungsschicht zu besonders vorteilhaften Oberflächenstrukturen führt. Insbesondere in Kombination mit einem weiteren Merkmal der Erfindung, wonach als erste Komponente der Legierung Nickel abgeschieden wird, eignet sich das erfindungsgemäße Verfahren für die Ausbildung von besonders vorteilhaften Dendritstrukturen in der resultierenden porösen Nickelschicht.

Erfindungsgemäß wird die zweite Komponente der Legierungsschicht dann in einem dritten Verfahrensschritt aus der Legierungsschicht im Wesentlichen vollständig herausgelöst. Im Wesentlichen bedeutet hierbei ein weitestgehendes Herauslösen der zweiten Komponente innerhalb technisch und wirtschaftlich sinnvoller Möglichkeiten. Es ist zur Herstellung der Erfindung daher erforderlich, dass die zweite Komponente von der ersten Komponente verschiedene Lösungseigenschaften besitzt. Als besonders geeignet haben sich hierbei Aluminium, Zink und Chrom erwiesen, da sie vorteilhafterweise in starken Basen, wie insbesondere Natron- oder Kalilauge leicht löslich sind. Der bevorzugte pH-Wert im Aktivierungsbad zur Herauslösung der zweiten Legierungskomponente beträgt daher 13,0 bis 14. Es hat sich hierbei insbesondere gezeigt, dass die Verwendung von Zink als zweiter Komponente in Verbindung mit einer Verwendung von Nickel als erster Komponente vorteilhafterweise zur Ausbildung von besonders großen und stabilen porösen Oberflächen führt. Insbesondere sind beide Komponenten hinsichtlich ihrer elektrochemischen Eigenschaften für eine besonders einfache Abscheidung mit sich graduell ändernden Legierungsanteilen geeignet.

Die Durchführung des ersten und des zweiten Verfahrensschrittes erfolgt erfindungsgemäß in jeweils separaten galvanischen Bädern. Dies hat den Vorteil, dass das Herstellungsverfahren kontinuierlich betrieben werden kann, ohne Änderungen an Elektrolyt und/oder Beschichtungsmaterial vornehmen zu müssen. Es eignet sich daher hervorragend für die industrielle Herstellung von erfindungsgemäßen Elektroden mit einer vergleichsweise hohen Produktionsrate und einem vergleichsweise geringen Produktionsaufwand.
Gemäß einer bevorzugten Ausgestaltung der Erfindung ist der Aktivierung der Elektrodenoberfläche, also der Herauslösung der zweiten Legierungskomponente ein weiterer Verfahrensschritt nachgeschaltet, in welchem die auf der Korrosionsschicht verbliebene Schicht bestehend aus der ersten Komponente zunächst umkristallisiert und anschließend ausgehärtet wird. Vorteilhafterweise dient dieser Schritt zur Reinigung des Elektrodenmaterials von eventuell nicht vollständig herausgelösten Rückständen der zweiten Legierungskomponente. Dies führt vorteilhafterweise zu einer größeren Reinheit des verwendeten Materials der ersten Komponente und folglich zu einer Verbesserung der elektrochemischen Elektrodeneigenschaften. Die ebenfalls vorgesehene Aushärtung führt darüber hinaus zu einer Verbesserung der mechanischen Stabilität sowie zu einer verbesserten Korrosionsbeständigkeit der Elektrode.

Die Erfindung wird nachfolgend anhand von Ausführungsbeispielen beschrieben. Die folgenden Ausführungen dienen hierbei lediglich der Erläuterung der Erfindung und sind für den Fachmann selbstverständlich nicht beschränkend zu verstehen.

Es zeigen
- Figur 1: eine ausschnittsweise Darstellung einer erfindungsgemäßen Elektrode in Schnittdarstellung;
- Figur 2: ein Flussdiagramm eines erfindungsgemäßen Verfahrens.

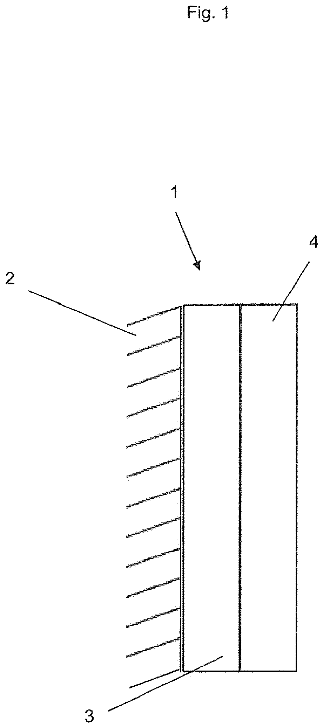

Figur 1 zeigt einen Ausschnitt der erfindungsgemäßen Elektrode 1 in einer Schnittdarstellung durch die einzelnen Schichten der Elektrode 1. Im vorliegenden Ausführungsbeispiel ist die Elektrode 1 als Kathode ausgebildet und dient beim Einsatz in einem entsprechenden alkalischen Wasserelektrolyseur der Erzeugung von Wasserstoff.

Auf dem Träger 2 ist eine Korrosionsschutzschicht 3 angeordnet. Die Korrosionsschutzschicht 3 ist vorliegend aus Nickel gebildet. Es hat sich gezeigt, dass Nickel insbesondere gegenüber den stark alkalischen Elektrolyten in der alkalischen Wasserelektrolyse eine besonders hohe chemische Beständigkeit aufweist und somit einen besonders guten Korrosionsschutz des Trägers sowie der damit verbundenen weiteren Komponenten bietet. Hierdurch lassen sich vorteilhafterweise besonders niedrige Degradationsgrade erreichen, die zu einer Lebensdauer von bis zu 15 Jahren führen.

Auf der Korrosionsschutzschicht 3 ist eine poröse (nicht gezeigt) Metallschicht angeordnet. Die Metallschicht ist im vorliegenden Ausführungsbeispiel aus Nickel gebildet. Die Nickelschicht weist hierbei eine Dendritstruktur (nicht gezeigt) auf, wobei die hierdurch entstehenden Poren in der Nickelschicht mit zunehmendem Abstand zur Korrosionsschutzschicht eine graduell zunehmende Porengröße aufweisen. Hierdurch wird zum einen eine besonders große Oberfläche bereitgestellt, die hinsichtlich der Adsorptions-, Desorptions- sowie der Elektronenübergangsvorgänge etwaige kinetische Hemmungen mindern sowie aufgrund der variablen Porengröße zusätzlich dazu etwaige auf Diffusionseffekten beruhende kinetische Hemmungen vermindern. Makroskopisch betrachtet führt die erhöhte Oberfläche zu einer verringerten Stromdichte und somit zu einer vergleichsweise geringen Überspannung.

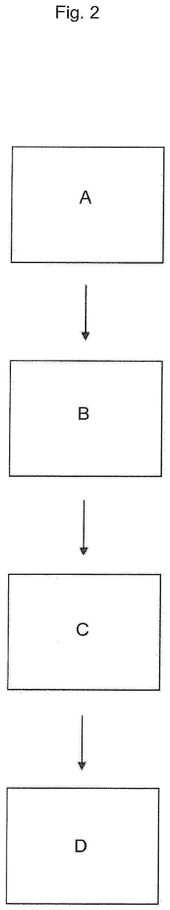

Figur 2 dient der Erläuterung des erfindungsgemäßen Verfahrens. Während des ersten Verfahrensschritt A wird eine gas-und flüssigkeitsdichte Korrosionsschutzschicht, vorliegend eine Nickelschicht auf dem Träger 1 galvanisch abgeschieden. Vorliegend wird der Träger hierfür in ein eigenes, ausschließlich zu diesem Zweck eingesetztes galvanisches Bad überführt und mit der Korrosionsschutzschicht galvanisch beschichtet.

Während des zweiten Verfahrensschrittes B wird nun eine Legierungsschicht, vorliegend bestehend aus einer ersten Komponente aus Nickel und einer zweiten Komponente aus Zink galvanisch abgeschieden. Hierfür wird der mit der Korrosionsschutzschicht beschichtete Träger aus dem ersten galvanischen Beschichtungsbad in ein zweites galvanisches Bad überführt, welches ausschließlich der galvanischen Beschichtung der Korrosionsschutzschicht mit der Legierungsschicht dient.

Die Abscheidungsraten im zweiten Verfahrensschritt B werden hierbei über eine automatisierte Steuerungseinrichtung kontinuierlich so eingestellt, dass der Nickelanteil in der Legierungsschicht mit zunehmender Schichtdicke graduell abnimmt und der Zinkanteil graduell zunimmt.

Nach Beendigung des zweiten Verfahrensschrittes B wird die mit der Legierungsschicht beschichteten Elektrode aus dem hierfür vorgesehenen Galvanisierungsbad in ein Aktivierungsbad überführt. Das Aktivierungsbad ist vorliegend mit einer wässrigen Kaliumhydroxidlösung mit einem stark basischen pH-Wert von 14 befüllt. Im Aktivierungsbad wird der Zinkanteil der Legierungsschicht vollständig (im technisch und wirtschaftlich sinnvoll erreichbarem Rahmen) aus der Legierungsschicht herausgelöst. Übrig bleibt lediglich eine Schicht aus Nickel, welche durch die Steuerung der Abscheidungsraten eine Porenstruktur aufweist, in der die Poren mit zunehmendem Abstand von der Korrosionsschutzschicht eine zunehmende Porengröße aufweist.

Nach Beendigung des dritten Verfahrensschritts C wird die erhaltene Elektrode in einem vierten Verfahrensschritt D zur Reinigung von Rückständen und Verunreinigungen umkristallisiert und zur Verbesserung der mechanischen und chemischen Beständigkeit ausgehärtet.

### Bezugszeichenliste

- 1: Elektrode
- 2: Träger
- 3: Korrosionsschutzschicht
- 4: poröse Metallschicht
- A: erster Verfahrensschritt
- B: zweiter Verfahrensschritt
- C: dritter Verfahrensschritt
- D: vierter Verfahrensschritt

## Patentansprüche

1. Elektrode für den Einsatz in der alkalischen Wasserelektrolyse, wenigstens bestehend aus
einem Träger,
einer auf dem Träger abgeschiedenen gas- und flüssigkeitsdichten Korrosionsschutzschicht aus Nickel, und
einer auf der Korrosionsschutzschicht abgeschiedenen porösen Nickelschicht, wobei die Poren der porösen Nickelschicht mit zunehmendem Abstand zur Korrosionsschutzschicht eine graduell zunehmende Porengröße aufweisen, wobei die poröse Nickelschicht eine Dendritstruktur aufweist.

2. Verfahren zur Herstellung einer Elektrode für die alkalische Wasserelektrolyse gemäß Anspruch 1,
wobei in einem ersten Verfahrensschritt eine Korrosionsschutzschicht auf einem Träger galvanisch abgeschieden wird,
und wobei in einem zweiten Verfahrensschritt eine Legierungsschicht wenigstens bestehend aus einer ersten Komponente und einer zweiten Komponente auf der Korrosionsschutzschicht galvanisch abgeschieden wird,
wobei die Abscheidungsraten der ersten und der zweiten Komponente während der Abscheidung der Legierungsschicht so eingestellt werden, dass der Anteil der ersten Komponente in der Legierungsschicht mit zunehmender Schichtdicke der Legierungsschicht graduell abnimmt und der Anteil der zweiten Komponente in der Legierungsschicht graduell zunimmt und
wobei die zweite Komponente der Legierungsschicht in einem dritten Verfahrensschritt aus der Legierungsschicht im Wesentlichen vollständig herausgelöst wird, **dadurch gekennzeichnet, dass** im ersten Verfahrensschritt eine Nickelschicht als Korrosionsschutzschicht abgeschieden wird, dass im zweiten Verfahrensschritt als erste Komponente der Legierung Nickel und als zweite Komponente der Legierung Zink abgeschieden wird und, dass der erste Verfahrensschritt und der zweite Verfahrensschritt jeweils in separaten galvanischen Bädern durchgeführt werden.

3. Verfahren nach Anspruch 2, **dadurch gekennzeichnet, dass** der dritte Verfahrensschritt in einem Aktivierungsbad mit einem pH-Wert von 13,0 bis 14 durchgeführt wird.

4. Verwendung einer Elektrode gemäß Anspruch 1 als Elektrode in einem alkalischen Wasserelektrolyseur.

## Claims

1. An electrode for the use in the alkaline water electrolysis, at least consisting of a carrier,
a gas- and liquid-tight corrosion protection layer composed of nickel and deposited on the carrier, and
a porous nickel layer deposited on the corrosion protection layer,
wherein the pores of the porous nickel layer comprise a gradually increasing pore size with increasing distance with respect to the corrosion protection layer, wherein the porous nickel layer comprises a dendrite structure.

2. A method for manufacturing an electrode for the alkaline water electrolysis according to claim 1,
wherein a corrosion protection layer will be galvanically deposited on a carrier in a first process step,
and wherein an alloy layer consisting of at least one first component and one second component will be galvanically deposited on the corrosion protection layer in a second process step,
wherein the deposition rates of the first and the second component will be set during the deposition of the alloy layer such that the portion of the first component in the alloy layer will gradually decrease with increasing layer thickness of the alloy layer and the portion of the second component in the alloy layer will gradually increase and
wherein the second component of the alloy layer will be essentially removed completely from the alloy layer in a third process step, **characterized in that** a nickel layer will be deposited as corrosion protection layer in the first process step, nickel will be precipitated as first component of the alloy and zinc will be precipitated as second component of the alloy in the second process step, and that the first process step and the second process step will be respectively carried out in separate electrolytic baths.

3. A method according to claim 2, **characterized in that** the third process step will be carried out in an activation bath having a pH value comprised between 13.0 and 14.

4. A use of an electrode according to claim 1 as electrode in an alkaline water electrolyzer.

## Revendications

1. Electrode pour l'utilisation dans une électrolyse d'eau alcaline, au moins composée de :
un support,
un revêtement anticorrosion en nickel étanche aux gaz et aux liquides, qui est déposé sur le support, et
une couche de nickel poreuse, qui est déposée sur le revêtement anticorrosion,
les pores de la couche de nickel poreuse comprenant une taille de particule graduellement augmentant avec la distance augmentant par rapport au revêtement anticorrosion, la couche de nickel poreuse comprenant une structure de dendrite.

2. Procédé de fabrication d'une électrode pour l'électrolyse d'eau alcaline selon la revendication 1,
dans lequel un revêtement anticorrosion est déposé sur un support par voie galvanique dans une première étape de procédé,
et dans lequel une couche d'alliage, qui est au moins composée d'une première composante et d'une deuxième composante, est déposée sur le revêtement anticorrosion par voie galvanique dans une deuxième étape de procédé,
dans lequel les taux de déposition de la première et de la deuxième composantes sont réglés pendant le dépôt de la couche d'alliage, de sorte que la proportion de la première composante dans la couche d'alliage diminue graduellement, si l'épaisseur de couche de la couche d'alliage augmente, et la proportion de la deuxième composante dans la couche d'alliage augmente graduellement et
dans lequel la deuxième composante de la couche d'alliage est essentiellement enlevée complètement de la couche d'alliage dans une troisième étape de procédé, **caractérisé en ce qu'**une couche de nickel est déposé comme revêtement anticorrosion dans la première étape de procédé, que du nickel est déposé comme première composante de l'alliage et du zinc est déposé comme deuxième composante de l'alliage dans la deuxième étape de procédé et que la première étape de procédé et la deuxième étape de procédé sont chacune effectuées dans des bains électrolytiques séparés.

3. Procédé selon la revendication 2, **caractérisé en ce que** la troisième étape de procédé est effectuée dans un bain d'activation ayant une valeur de pH comprise entre 13,0 et 14.

4. Utilisation d'une électrode selon la revendication 1 comme électrode dans un électrolyseur d'eau alcalin.
